# EUROPÄISCHE PATENTSCHRIFT

(11) **EP 3 385 422 B1**
(45) Veröffentlichungstag und Bekanntmachung des Hinweises auf die Patenterteilung: **02.06.2021**
(21) Anmeldenummer: 18165659.6
(22) Anmeldetag: 04.04.2018
(51) Int. Cl.: D04H 1/485, D04H 1/555

(54) **THERMISCH GEPRÄGTER VLIESSTOFF UND VERFAHREN ZU SEINER HERSTELLUNG**
THERMALLY EMBOSSED NONWOVEN FABRIC AND METHOD FOR PRODUCING THE SAME
NON-TISSÉ ESTAMPÉ THERMIQUEMENT ET SON PROCÉDÉ DE FABRICATION

(30) Priorität: 07.04.2017 DE 102017003411
(43) Veröffentlichungstag der Anmeldung: 10.10.2018
(73) Patentinhaber: Carl Freudenberg KG, 69469 Weinheim (DE)
(72) Erfinder: WEIS, Ralf, 55124 Mainz (DE); KOMP, Ansgar, 69117 Heidelberg (DE); WEIK, Angela, 68782 Brühl (DE); VILLING-FALUSI, Sandra, 68542 Heddesheim (DE); KRAMER, Dominic, 60323 Frankfurt (DE)

(56) Entgegenhaltungen:
- EP-A1- 2 554 730
- EP-A2- 2 006 009
- EP-A2- 2 058 116
- DE-A1- 10 117 354
- DE-C1- 10 009 281
- US-A1- 2003 041 953
- US-A1- 2003 199 219

## Beschreibung

### Technisches Gebiet

Die Erfindung betrifft einen thermisch geprägten Vliesstoff. Die Erfindung betrifft ferner ein Verfahren zu seiner Herstellung sowie seine Verwendung zur Herstellung einer Dekorschicht für den Automobilinnenraum.

### Stand der Technik

Der Automobilinnenraum wird heutzutage fast ausschließlich mit textilen Flächengebilden als Dekorschicht ausgekleidet. Dies dient in erster Linie einer positiven optischen Wahrnehmung und vermittelt den Personen im Innenraum verglichen mit glatten Strukturen aus Metall oder Plastik ein angenehmeres Raumgefühl. Dazu kommt, dass textile Flächengebilde eine geringere Schallreflektion und eine größere Schallabsorption als glatte oder harte Materialien haben.

Im Bereich der textilen Flächengebilde werden insbesondere Gewebe, Gewirke sowie Vliesstoffe eingesetzt, wobei Gewebe aufgrund ihrer Hochpreisigkeit heutzutage praktisch nicht mehr zu finden sind. Gewirke dagegen werden aufgrund der Möglichkeit auch sehr feine Strukturen zu realisieren sehr häufig verwendet. Allerdings findet sich hier meist nur der Einbau mit mindestens einer Zusatzlage, häufig einem weichem Schaum, als untere Schicht, da die feinstrukturierten Materialien allein zu anfällig für Beschädigungen wären und als solche auf hartem Untergrund auch keine guten Abrasionsbeständigkeiten gegenüber Abrieb zeigen. Zusätzlich sind Gewirke recht anfällig für die Penetration von Klebstoffen mit deren Hilfe in der Regel die Befestigung im Innenraum vorgenommen wird.

Vliesstoffe hingegen können problemlos auch ohne Zusatzlage als Dekor eingesetzt werden, weil sie eine hohe Gleichmäßigkeit, bei hoher Dicke und Belegungsdichte der Oberfläche mit Fasern aufweisen. Als besonders geeignet haben sich dabei kardierte, quergelegte Vliesstoffe erwiesen, die aus thermoplastischen Fasern bestehen. Der Kardierprozess mit anschließender Querlegung erzeugt dabei die nötige Ausrichtung der Fasern und ihre grundsätzliche Verbindung zueinander zu einem Vliesstoff. Die thermoplastischen Fasern erlauben später die zur Anpassung an den Automobilinnenraum notwendige thermische Verformbarkeit und sorgen dadurch für eine gute Verarbeitbarkeit in den Prozessschritten der Herstellung des Dachhimmels.

Um ausreichende mechanische Festigkeit bei gleichzeitig guter mechanischer Verformbarkeit mit hohen lokalen Dehnungswerten, wie sie beim Thermoformen auftreten (Größenordnung von bis zu 60 %) zu gewährleisten, wird nach dem Kardierprozess mit anschließender Querlegung in einem Vernadelungsprozess mechanisch verfestigt. Auf diese Weise können die notwendigen Zugfestigkeiten und Höchstzugdehnungswerte entsprechend erreicht werden.

Die Oberfläche bei rein mechanisch verfestigten Vliesstoffen ist jedoch noch relativ anfällig für Beschädigungen. Daher wird nach der mechanischen Verfestigung zusätzlich eine chemische Verfestigung durchgeführt. Hierbei werden mit Hilfe eines polymeren Binders die Fasern vor allem auf der Oberfläche miteinander verbunden.

Auf diese Weise hergestellte Vliesstoffe des Stands der Technik weisen, bis auf eine geringfügige und meist ungeordnete Strukturierung durch die Nadeleinstiche kein Relief auf. In diesem Aspekt ist der Vliesstoff bislang den Gewirken unterlegen, welche inhärent eine regelmäßige mit dem Auge sichtbare 3D-Struktur besitzen. Es hat sich jedoch gezeigt, dass das Vorhandensein von sichtbaren 3D-Strukturen im Innenraum von Automobilen immer wichtiger wird, da derartige Strukturen den Automobilinnenraum optisch vergrößern können. Dieser Effekt kommt insbesondere beim beschränkten Raum im Automobil zu tragen. Gerade durch den Einsatz immer dickerer Isolierschichten zur Schall- und Wärmeisolation, aber auch durch das Verwenden immer mehr sicherheitsrelevanter Bauteile wie Airbags wird der Innenraum nämlich zunehmend beschränkt. Eine Vergrößerung des gesamten Automobils hat in den letzten Jahren bereits stattgefunden, stößt aber immer mehr an gesetzliche (Straßenverkehrsordnung), sowie auch bauliche Grenzen (Straßenbreite, Parkplatzbreite) und wird damit auch vom Kunden nicht mehr weiter gewünscht. Die 3D-Strukturierung von Oberflächen im Automobilinnenraum ermöglicht es nun trotz des beschränkten Raumes ein Gefühl von großzügiger Raumgestaltung zu vermitteln. Zu diesem Zweck bietet sich insbesondere der Dachhimmel an, da er eine große Fläche einnimmt, so dass durch entsprechende Strukturierung der Automobilinnenraum besonders effektiv optisch vergrößert werden kann.

Um den Eindruck einer 3D-strukturierten Oberfläche zu erzeugen werden Vliesstoffe oftmals mit einer bestimmten Musterung bedruckt, die einen optischen 3-D Effekt hervorruft. Dieser rein optische Effekt wird jedoch oftmals als nicht ausreichend betrachtet, da er vom Kunden bei genauerer Betrachtung als "Täuschung" angesehen wird. Erwünscht ist dagegen die Haptik und Optik einer echten 3D-Strukturierung, die als besonders hochwertig empfunden wird.

Die US 6737114B2 beschreibt einen Vliesstoff, der eine dreidimensionale gedruckte Oberfläche aufweist, die durch Siebdrucken des Gewebes mit einem "Puff-Pigment" erreicht wird. Diese Methode ist allerdings limitiert in der Ausprägung der 3D-Struktur im Bezug auf Schärfe und Konturtiefe. Dabei gilt, je höher die Kontur desto geringer die Schärfe der 3D-Strukturierung.

Ebenfalls bekannt ist es Vliesstoffe zur Erzeugung eines 3-D Effekts mit einem Heissprägungsmuster zu versehen. Hierzu werden in der Regel erhitzte strukturierte Kalanderwalzen eingesetzt. Die mit diesem Verfahren in herkömmlicher Weise hergestellten Vliesstoffe zeigen jedoch verschiedene Nachteile. So haben diese Vliesstoffe entweder keine ausreichende Strukturierungstiefe oder es sind zu stark verpresste, papierartige Vliesstoffe mit mangelnder Höchstzugdehnung und damit auch mangelnder Thermoformbarkeit.

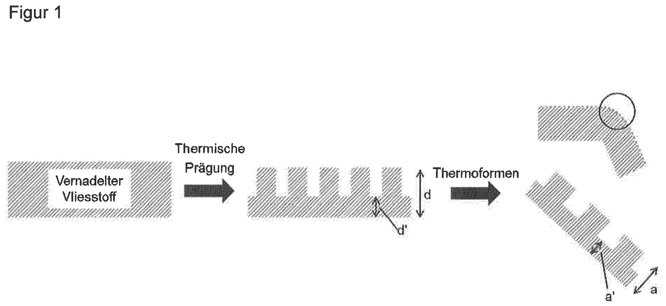

Auch eine zu geringe Strukturierungstiefe führt dazu, dass der Vliesstoff für den Thermoformingprozess ungeeignet ist, da dabei insbesondere im Bereich der Kanten lokale Glättungen auftreten. Dieser Effekt ist in Figur 1 gezeigt.

Die WO 0017435A1 beschreibt formbare und haltbare textile Flächengebilde und ein Verfahren zur Herstellung von textilen Flächengebilden, das geeignet ist für das laminieren auf eine konturierte Oberfläche, wie zum Beispiel als Dekorschicht im Dachhimmel in einem Automobil oder einem anderen Fahrzeug. Das textile Flächengebilde auf Basis eines Vliesstoffs wird dabei einem Nähwirkprozess unterworfen. Nach dem Nähwirkschritt wird das textile Flächengebilde wärmebehandelt, wodurch es zu einem Verdichten und zum Schrumpfen kommt. Nachteilig an diesem Verfahren ist, dass keine ausgeprägte 3D-Strukturierung erreicht werden kann. Die gebildeten Maschen zeigen lediglich eine geringfügig ausgebildete Struktur.

### Darstellung der Erfindung

Der Erfindung liegt die Aufgabe zu Grunde einen Vliesstoff mit ausgeprägter 3-D Struktur bereitzustellen, der sich zur Herstellung einer Dekorschicht für den Automobilinnenraum eignet. Der Vliesstoff soll dabei in einem Thermoformingprozess verarbeitet werden können ohne dass die 3-D Struktur signifikant geglättet wird. Der Erfindung liegt ferner die Aufgabe zu Grunde ein Verfahren zur Herstellung eines derartigen Vliesstoffs bereitzustellen sowie Verwendungen für ihn.

Diese Aufgabe wird gelöst durch einen thermisch geprägten Vliesstoff, geeignet zur Herstellung einer Dekorschicht für den Autoinnenraum, wobei der Vliesstoff thermoplastische Fasern enthält, vernadelt ist und eine Höchstzugdehnung von mindestens 30 % zeigt, und wobei der Vliesstoff eingeprägte Vertiefungen aufweist, die an ihrem Grund Grundflächen aufweisen, wobei das Verhältnis zwischen der Dicke des Vliesstoffs im Bereich der Grundflächen der Vertiefungen und der Dicke des Vliesstoffs im Bereich der ungeprägten Bereiche höchstens 0,1 beträgt und wobei der Anteil der Gesamtgrundfläche der Vertiefungen an der Gesamtfläche des Vliesstoffs von 0,5 % bis 30 % beträgt.

Der erfindungsgemäße Vliesstoff zeigt eine ausgeprägte 3-D Struktur, die sich in einem Verhältnis zwischen der Dicke des Vliesstoffs im Bereich der Grundflächen der Vertiefungen und der Dicke des Vliesstoffs im Bereich der ungeprägten Bereiche von 0,005 bis 0,1 widerspiegelt.

Unter eingeprägten Vertiefungen sind Bereiche des Vliesstoffs zu verstehen, die zumindest an der Oberfläche teilweise verschmolzen vorliegen und visuell als Vertiefung wahrgenommen werden können. Unter ungeprägten Bereichen sind Bereiche zu verstehen, die nicht mit einem Prägemuster versehen wurden und deshalb nicht oder nur geringfügig thermisch verschmolzen vorliegen.

Aus diesem Grund kann die 3-D Struktur auch beim Verformen in einem Thermoformingprozess in einem Maße erhalten werden, dass sie beispielsweise den Automobilinnenraum sehr effektvoll optisch vergrößern kann. Vorzugsweise weist der Vliesstoff ein Verhältnis zwischen der Dicke des Vliesstoffs im Bereich der Grundflächen der Vertiefungen und der Dicke des Vliesstoffs im Bereich der ungeprägten Bereiche von 0,005 bis 0,1, bevorzugt von 0,01 bis 0,1, und insbesondere von 0,01 bis 0,05 auf.

Gleichzeitig zeigt der Vliesstoff eine hohe mechanische Stabilität, was sich in seiner Höchstzugdehnung von mehr als 30 %, beispielsweise von 30 % bis 150 % zeigt. Vorzugsweise weist der Vliesstoff eine Höchstzugdehnung von 40 % bis 150 %, noch bevorzugter von 40 % bis 120 %, und insbesondere von 50 % bis 120 % auf. Hierdurch kann der Vliesstoff problemlos in einem Thermoformingprozess verarbeitet werden, ohne dass es zu einem Reißen des Vliesstoffs aufgrund der beim Thermoformingprozess auftretenden Dehnung des Vliesstoffs kommt. Es war überraschend, dass ein Vliesstoff mit einer derart ausgeprägten 3D-Struktur, d.h. mit einem derart großen Verhältnis zwischen der Dicke des Vliesstoffs im Bereich der Grundflächen der Vertiefungen und der Dicke des Vliesstoffs im Bereich der ungeprägten Bereiche so gute Höchstzugdehnungswerte zeigt. Durch das Prägen unter Ausbildung einer derart ausgeprägten 3D-Struktur werden die Fasern im Vliesstoff nämlich lokal stark zusammengepresst, bis hin zur Bildung eines Polymerfilms als Konglomerat aus vielen Fasern. Polymerfilme weisen jedoch schlechtere Höchstzugdehnungswerte als aus Fasern bestehende Vliesstoffe auf, da sich bei diesen die Fasern in gewissem Maße gegeneinander bewegen und auf diese Art und Weise in einem großen Bereich angelegten Zugdehnungskräften nachgeben können. Überraschend sind hohe Höchstzugdehnungswerte auch mit dem erfindungsgemäßen Vliesstoff möglich, trotz der ausgeprägten 3D-Strukturierung. Ohne sich auf einen Mechanismus festzulegen, wird vermutet, dass dies durch die Einstellung des Anteils der Gesamtgrundfläche der Vertiefungen an der Gesamtfläche des Vliesstoffs auf höchstens 30 % gelingt. Dadurch dass die Gesamtgrundfläche der Vertiefungen nur einen geringen Anteil an der Gesamtfläche des Vliesstoffs einnimmt, fällt die Verschlechterung der Höchstzugdehnung durch die geprägten Bereiche nicht wesentlich ins Gewicht.

In einer bevorzugten Ausführungsform der Erfindung beträgt der Anteil der Gesamtgrundfläche der Vertiefungen an der Gesamtfläche des Vliesstoffs von 0,5 % bis 25 %, vorzugsweise von 0,5 % bis 20 %, noch bevorzugter von 0,5 % bis 15 % , insbesondere von 0,5 % bis 10 %.

Erfindungsgemäß beträgt die Höchstzugdehnung des Vliesstoffs mindestens 30 %. Diese hohe mechanische Stabilität des Vliesstoffs kann zumindest teilweise dadurch erzielt werden, dass ein vernadelter Vliesstoff eingesetzt wird.

Aufgrund seiner guten mechanischen Eigenschaften kann der erfindungsgemäße Vliesstoff ohne weitere Lagen, insbesondere ohne Verstärkungslage eingesetzt werden. Dies ermöglicht eine einfache und kostengünstige Herstellung.

Besonders gute Festigkeiten haben sich gezeigt, wenn der Vliesstoff eine Nadeleinstichdichte von 10 /cm² bis 2000 /cm², vorzugsweise von 100 /cm² bis 1000 /cm² und insbesondere von 200 /cm² bis 600 /cm² aufweist.

Die hohe mechanische Stabilität des erfindungsgemäßen Vliesstoffs spiegelt sich auch darin, dass er einer hohen Höchstzugkraft standhält, beispielsweise von mehr als 150 N/5 cm, bevorzugt von 200 N/5 cm bis 1000 N/5 cm, noch bevorzugter von 250 N/5 cm bis 1000 N/5 cm, und insbesondere von 250 N/5 cm bis 600 N/5 cm und/oder einen Abrieb, gemessen in Anlehnung an JIS L 1096 von besser als der Note 3, bevorzugt besser als der Note 4 aufweisen kann.

Diese Kombination einer ausgeprägten 3-D Struktur und gleichzeitig hohen mechanischen Stabilität kann erfindungsgemäß dadurch erhalten werden, dass das thermische Prägen des Vliesstoffs mit einer Prägewalze durchgeführt wird, die eine Gravurtiefe von mindestens der Dicke des ungeprägten Vliesstoffs in Kombination mit einer vergleichsweise geringen Verpressfläche aufweist. Erfindungsgemäß bevorzugt wird der Vliesstoff unter Verwendung einer Prägewalze hergestellt, die eine Gravurtiefe von 0,1 mm bis 2,5 mm, noch bevorzugter von 0,25 mm bis 2,0 mm, und insbesondere von 0,5 mm bis 2,0 mm, und eine Verpressfläche von 0,5 % bis 30 %, noch bevorzugter von 0,5 % bis 25 %, noch bevorzugter von 0,5 % bis 20 %, noch bevorzugter von 0,5 % bis 15 %, insbesondere von 0,5 % bis 10 % aufweist. Dabei ist unter Gravurtiefe die Höhe der Prägeprotrusionen zu verstehen. Weist die Gravurwalze Protrusionen unterschiedlicher Höhe auf, so entspricht die Gravurtiefe der Höhe der maximalen Protrusion. Unter der Verpressfläche ist der Anteil der Fläche der Prägewalze zu verstehen, der sich aus der Summe der Plateauflächen der Protrusionen ergibt. Ohne sich erfindungsgemäß auf einen Mechanismus festzulegen wird vermutet, dass durch die große Gravurtiefe der Prägewalze der Vliesstoff nur teilweise geprägt wird, Bereiche abseits der geprägten Stelle bleiben annähernd unbeeinflusst. Dementsprechend weist der Vliesstoff erfindungsgemäß bevorzugt ungeprägte Bereiche auf, die sich dadurch auszeichnen, dass sie nicht oder nur geringfügig thermisch verschmolzen sind. Vorteilhafterweise beträgt der Anteil dieser ungeprägten Bereiche von 50 bis 100 %.

Die große Gravurtiefe der Prägewalze ermöglicht es ferner abseits der verpressten Stellen die Originaldicke des Materials zu erhalten. Dies ist vorteilhaft, da hierdurch die Karschierfunktion des Vliesstoffs optimal ausgenutzt werden kann. Oftmals enthalten nämlich üblicherweise verwendete Substrate im Automobilinnenraum Glasfasern, die vollständig verdeckt werden müssen.

Die Verwendung von Prägewalzen mit großer Gravurtiefe, d.h. von mindestens der Dicke des ungepägten Vliesstoffs ist unüblich, da aufwendige Maßnahmen, beispielsweise langsame Prozessführung, getroffen werden müssen um eine Perforation auszuschließen.

Erfindungsgemäß besonders bevorzugt sind die Vertiefungen ultraschallgeprägt. Hierdurch kann besonders leicht erreicht werden, dass die ungeprägten Bereiche annähernd unbeeinflusst verbleiben. Gleichzeitig kann durch den Ultraschall an den Vertiefungen trotz großer räumlicher Nähe genug Energie eingebracht werden um eine Verfilmung der Fasern zu erreichen. Hierdurch kann besonders definiert ein Material mit großem Verhältnis zwischen der Dicke des Vliesstoffs im Bereich der Grundflächen der Vertiefungen und der Dicke des Vliesstoffs im Bereich der ungeprägten Bereiche und damit auch eine ausgeprägte 3D-Struktur erhalten werden. Darüber hinaus bleiben ultraschallgeprägte Vertiefungen beim thermischen Verformen intakt oder werden nur so geringfügig verändert, dass es mit dem bloßen Auge nicht wahrnehmbar ist.

Bevorzugt sind die thermoplastischen Fasern Stapelfasern. Die Stapelfasern weisen vorzugsweise eine Faserlänge von 10 mm bis 80 mm, noch bevorzugter von 20 mm bis 60 mm, und insbesondere von 30 mm bis 60 mm auf.

Vorteilhafter Weise zeigen die geprägten Bereiche ein Aspektverhältnis von 4:1 bis 1:2, bevorzugt von 4:1 bis 1:1, und insbesondere von 3:1 bis 1:1. Diese Aspektverhältnisse ermöglichen es die ausgeprägte 3D-Strukturierung besonders ansprechend zu gestalten wodurch die gewählte Musterung hervorgehoben werden kann.

Ebenfalls vorteilhafterweise zeigen die geprägten Bereiche des Vliesstoffs eine Tiefe von 0,1 mm bis 2,5 mm, noch bevorzugter von 0,25 mm bis 2,0 mm, insbesondere von 0,5 mm bis 2,0 mm. Bei diesen Tiefen sind die Vertiefungen besonders gut visuell und haptisch detektierbar.

Um die thermische Prägbarkeit des Vliesstoffs zu ermöglichen weist dieser vorzugsweise thermoplastische Fasern auf, bevorzugt in einer Menge von mindestens 50 Gew.%, beispielsweise von 50 Gew.% bis 99 Gew.%, noch bevorzugter von 70 Gew.% bis 95 Gew.%, und insbesondere von 90 Gew.% bis 95 Gew.% jeweils bezogen auf das Gesamtgewicht des Vliesstoffs. Vorteilhaft an der Verwendung thermoplastischer Fasern ist ferner, dass diese gleichzeitig das Thermoformen ermöglichen. Vorteilhafterweise weisen die thermoplastischer Fasern einen Schmelzpunkt von 100 °C bis 300 °C, noch bevorzugter von 150 °C bis 300 °C, und insbesondere von 200 °C bis 300 °C auf. Durch den Einsatz derartiger thermoplastischer Fasern kann eine gute Stabilität der Materialien in der Anwendung bei gleichzeitig guter Verarbeitbarkeit optimal kombiniert werden.

Es können die verschiedensten thermoplastischen Fasern eingesetzt werden. Als besonders geeignet haben sich thermoplastische Fasern erwiesen, die Polyester, insbesondere Polyethylenterephthalat, Polybutylenterephthalat, Polytrimethylenterephthalat, Polylactid, Polycaprolacton, Polyamid, insbesondere Polycaprolactam, Polyamid-6,6, Polyamid-11, Polyamid-12, oder Polyolefin, insbesondere Polypropylen, Polyethylen, Polystyrol enthalten, sowie Gemische und/oder Copolymere hiervon.

Die thermoplastischen Fasern zeigen vorteilhafter Weise einen Fasertiter von 0,1 denier bis 10 denier, noch bevorzugter von 1 denier bis 6 denier, und insbesondere von 1,5 denier bis 4 denier. Mit diesen Feinheiten kann die Bauschigkeit und das Rückstellvermögen der Fasern in Zusammenhang mit dem gewünschten Weichgriff besonders gut erzielt werden.

Das Flächengewicht des Vliesstoffs kann ebenfalls variieren. Als geeignet haben sich beispielsweise Flächengewichte im Bereich von 50 g/m² bis 500 g/m², noch bevorzugter von 100 g/m² bis 300 g/m², noch bevorzugter von 100 g/m² bis 250 g/m², und insbesondere von 150 g/m² bis 250 g/m² erwiesen. Mit diesen Flächengewichten kann sowohl die gewünschte Dicke zur vollständigen Abdeckung des unterliegenden Substrats, sowie auch die nötige Höchstzugdehnung für den Thermoformingschritt besonders gut erzielt werden.

Erfindungsgemäß bevorzugt weist der Vliesstoff eine Dicke im Bereich von 0,25 mm bis 2,5 mm, bevorzugt von 0,5 mm bis 2,5 mm, noch bevorzugter von 0,5 mm bis 2,0 mm und insbesondere von 1,0 mm bis 2,0 mm auf.

Zur Verbesserung der Einbindung der Fasern an der Oberfläche (Abrasionsfähigkeit) kann der Vliesstoff vorzugsweise auf mindestens einer Oberfläche eine polymere Binderschicht aufweisen. Diese enthält bevorzugt Polyakrylate, Polystyrol, Polyurethane, Polycarbonate, Polyvinylacetat-Ethylen Copolymere, deren Gemische und Copolymere, insbesondere in einem Anteil von mehr als 90 Gew.% bezogen auf das Gesamtgewicht der Binderschicht.

Zu diesem Zweck hat es sich als günstig erwiesen, wenn die polymere Binderschicht ein Flächengewicht von 5 g/m² bis 50 g/m², vorzugsweise von 5 g/m² bis 40 g/m², noch bevorzugter von 5 g/m² bis 30 g/m² aufweist.

Ein weiterer Gegenstand der vorliegenden Erfindung betrifft ein Verfahren zur Herstellung eines thermisch geprägten Vliesstoffs mit einer Höchstzugdehnung von mindestens 30 %, geeignet als Dekorschicht für den Autoinnenraum, umfassend folgende Schritte:
- Bereitstellen eines vernadelten Vliesstoffs, umfassend thermoplastische Fasern,
- Thermisches Prägen des Vliesstoffs derart, dass dem Vliesstoff eingeprägte Vertiefungen verliehen werden, die an ihrem Grund Grundflächen aufweisen, wobei das Verhältnis zwischen der Dicke des Vliesstoffs im Bereich der Grundflächen der Vertiefungen und der Dicke des Vliesstoffs im Bereich der ungeprägten Bereiche höchstens 0,1 beträgt, und wobei der Anteil der Gesamtgrundfläche der Vertiefungen an der Gesamtfläche des Vliesstoffs von 0,5 % bis 30 % beträgt.

Das erfindungsgemäße Verfahren eignet sich insbesondere zur Herstellung eines erfindungsgemäßen Vliesstoffs gemäß einer oder mehrerer der hier beschriebenen Ausführungsformen. Mithin sollen die vorangehenden im Hinblick auf den erfindungsgemäßen Vliesstoff beschriebenen bevorzugten Ausführungsformen mutatis mutandis sich als bevorzugte Ausführungsformen auch auf das erfindungsgemäße Verfahren beziehen.

Im ersten Verfahrensschritt wird ein vernadelter Vliesstoff, umfassend thermoplastische Fasern bereitgestellt bzw. hergestellt. Durch die Verwendung eines vernadelten Vliesstoffs kann der Vliesstoff mit hoher Höchstzugkraft erhalten werden.

In einer bevorzugten Ausführungsform wird die Vernadelung so durchgeführt, dass eine Nadeleinstichdichte von 10 /cm² bis 2000 /cm², vorzugsweise von 100 /cm² bis 1000 /cm² und insbesondere von 200 /cm² bis 600 /cm² erreicht wird.

Die Herstellung des ungeprägten Vliesstoffs kann auf die üblichen, dem Fachmann bekannten Arten und Weisen erfolgen. Werden, wie erfindungsgemäß bevorzugt, Stapelfasern eingesetzt, so werden diese zweckmäßigerweise zunächst kardiert und zu einem Vlies gelegt. Hieran kann sich eine thermische Vorverfestigung gefolgt von dem Vernadelungschritt anschließen.

Beim thermischen Prägen wird der Anteil der Gesamtgrundfläche der Vertiefungen an der Gesamtfläche des Vliesstoffs auf 0,5 % bis 30 % eingestellt. Dies kann über geeignete Auswahl der Verschweißfläche der Prägewalze erreicht werden. Diese beträgt dementsprechend vorzugsweise ebenfalls von 0,5 % bis 30 %.

Beim thermischen Prägen werden ferner dem Vliesstoff eingeprägte Vertiefungen verliehen, die an ihrem Grund Grundflächen aufweisen, wobei das Verhältnis zwischen der Dicke des Vliesstoffs im Bereich der Grundflächen der Vertiefungen und der Dicke des Vliesstoffs im Bereich der ungeprägten Bereiche höchstens 0,1 beträgt. Dies kann über eine Einstellung der Gravurtiefe der Prägewalze erreicht werden.

Vorzugsweise werden beheizte Prägewalzen eingesetzt, beispielsweise mit einer Temperatur von 180 °C bis 240 °C. Diese weisen vorteilhafterweise eine Gravurtiefe von 0,1 mm bis 2,5 mm auf. In einer weiteren bevorzugten Ausführungsform wird das Prägen mit einer Prägewalze durchgeführt, die eine Gravurtiefe aufweist, die mindestens der Dicke des Vliesstoffs im Bereich der ungeprägten Bereiche entspricht. Dies ist vorteilhaft, da die ungeprägten Bereiche so nicht verpresst werden, was sich positiv auf die optischen und mechanischen Eigenschaften des Vliesstoffs auswirkt.

In einer besonders bevorzugten Ausführungsform der Erfindung wird das Prägen des Vliesstoffs als Ultraschallprägen durchgeführt. Durch den Ultraschall können thermoplastische Materialien angeregt und aufgeschmolzen werden, was das Einbringen von Prägemustern ermöglicht.

Im Unterschied zu der Verwendung beheizter Prägewalzen, kann beim Ultraschallprägen die Energie über die hochfrequente Anregung eines Ultraschallamboss eingebracht werden. Dies ist vorteilhaft, da auf diese Weise mit deutlich niedrigeren Temperaturen gearbeitet werden und die Energie zielgerichtet an die gewünschten Bereiche des Vliesstoffs eingetragen werden kann. Hierdurch kann die Einstellung des spezifischen Verhältnisses zwischen der Dicke des Vliesstoffs im Bereich der geprägten Bereiche und der ungeprägten Bereiche besonders gleichmäßig, reproduzierbar und genau durchgeführt werden. Darüber hinaus ist das Ultraschallprägen besonders prozessstabil. Ein weiterer wesentlicher Vorteil dieses Verfahrens ist, dass die ungeprägten Bereiche hier besonders wenig beeinflusst, d.h. weder verpresst noch angeschmolzen werden, was sich positiv auf die optischen und mechanischen Eigenschaften des Vliesstoffs auswirkt.

Ein weiterer Gegenstand der Erfindung ist ein thermisch geprägter Vliesstoff herstellbar mit einem Verfahren gemäß einer oder mehreren der vorgenannten Ausführungsformen.

Der erfindungsgemäße Vliesstoff gemäß einer oder mehreren der beschriebenen Ausführungsformen eignet sich hervorragend zur Herstellung einer Dekorschicht für den Autoinnenraum, da er eine ausgeprägte 3-D Struktur mit einer guten mechanischen Stabilität und insbesondere einer guten Thermoverformbarkeit kombiniert. Erfindungsgemäß besonders bevorzugt wird der Vliesstoff zur Herstellung eines Dachhimmels für den Autoinnenraum eingesetzt.

Eine weitere Ausführungsform der Erfindung umfasst einen thermoverformten erfindungsgemäßen Vliesstoff gemäß einer oder mehreren der beschriebenen Ausführungsformen.

In einer bevorzugten Ausführungsform zeigt der Vliesstoff nach einem Thermoformen um eine Kante mit einem Winkel von 90 im Bereich der Verformung eingeprägte Vertiefungen, die an ihrem Grund Grundflächen aufweisen, wobei das Verhältnis zwischen der Dicke des Vliesstoffs im Bereich der Grundflächen der Vertiefungen und der Dicke des Vliesstoffs im Bereich der ungeprägten Bereiche höchstens 0,1 beträgt.

### Figurenbeschreibung

In Figur 1 zeigt d die Dicke des Vliesstoffs im Bereich der ungeprägten Bereiche und d' die Dicke des Vliesstoffs im Bereich der Grundflächen der Vertiefungen, jeweils vor dem Thermoformingprozess, und a und a' die entsprechenden Dicken nach dem Thermoformingprozess. Wie aus dem in Vergrößerung dargestellten eingekreisten Bereich ersichtlich, verursacht das Thermoformen insbesondere an den Kanten eine lokale Glättung der 3-D Struktur.

Figur 2 zeigt einen Querschnitt des erfindungsgemäßen Vliesstoffs.

Die in der vorliegenden Beschreibung angegebenen Parameter werden wie folgt bestimmt:
**Höchstzugdehnung:** Messung nach Prüfvorschrift gemäß DIN EN 29073-3, bei einer Verformungsgeschwindigkeit von 200 mm/min.

**Höchstzugkraft:** Messung nach Prüfvorschrift gemäß DIN EN 29073-3, bei einer Verformungsgeschwindigkeit von 200 mm/min.

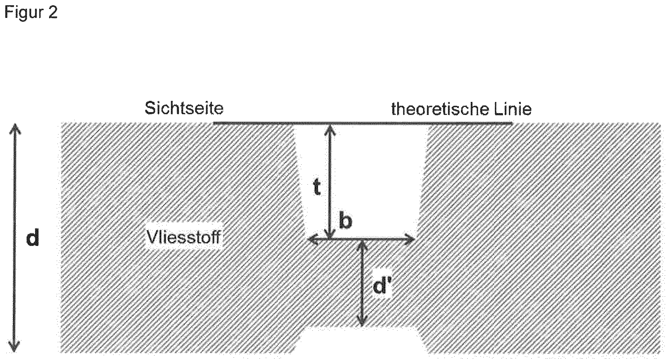

**Dicke des Vliesstoffs im Bereich der Grundflächen der eingeprägten Vertiefungen:** Mithilfe eines Skalpells wird ein Querschnitt des Vliesstoffs präpariert. Dabei ist darauf zu achten, dass dieser mindestens 5 Vertiefungen umfasst. Alternativ können auch mehrere Querschnitte präpariert werden. Anschließend wird die Dicke des Vliesstoffs im Bereich der Grundflächen der Vertiefungen (in Figur 2 bezeichnet als d') mit einem geeigneten Mikroskop, vorzugweise mit einem Elektronenmikroskop gemessen. Die Messung wird für mindestens 5 verschiedene Vertiefungen und an jeweils mindestens 3 Stellen pro Vertiefung durchgeführt.

**Dicke des Vliesstoffs im Bereich der ungeprägten Bereiche:** Messung nach Prüfvorschrift gemäß DIN EN ISO 9073-2.

**Flächengewicht:** Messung nach Prüfvorschrift gemäß EN 29073 - T1. Es werden für die Bestimmung der Flächengewichte jeweils 3 100x100 mm große Proben ausgestanzt, die Proben gewogen und ein Mittelwert gebildet.

**Tiefe der geprägten Bereiche:** Mithilfe eines Skalpells wird ein Querschnitt des Vliesstoffs präpariert. Dabei ist darauf zu achten, dass dieser mindestens 5 Vertiefungen umfasst. Alternativ können auch mehrere Querschnitte präpariert werden. Anschließend wird die Tiefe der geprägten Bereiche (in Figur 2 gekennzeichnet als t) als der senkrechte Abstand zwischen einer theoretischen Linie (siehe Figur 2) auf Höhe der Oberfläche der ungeprägten Bereiche und der Grundfläche der Vertiefungen (in Figur 2 gekennzeichnet als b) im Elektronenmikroskop bestimmt. Dabei werden jeweils mindestens 5 geprägte Bereiche, an jeweils mindestens 3 Stellen pro geprägten Bereich vermessen.

**Aspektverhältnis:** Mithilfe eines Skalpells wird ein Querschnitt des Vliesstoffs präpariert. Dabei ist darauf zu achten, dass dieser mindestens 5 Vertiefungen an deren breitester Stelle umfasst. Alternativ können auch mehrere Querschnitte präpariert werden. Anschließend wird der Durchmesser der Vertiefungen an der Grundfläche bestimmt (in Figur 2 bezeichnet als b). Es werden jeweils mindestens 5 geprägte Bereiche vermessen und ein Mittelwert gebildet. Das Aspektverhältnis ergibt sich aus dem Verhältnis der Tiefe (in Figur 2 bezeichnet als t) und des gemessenen Durchmessers der Grundfläche.

**Abrieb:** Die Bestimmung des Abriebs erfolgt mit dem Taber-Abriebtester gemäß JIS L 1096, Abriebradbezeichnung CS-10, 150 Zyklen mit einer Belastung von 500 gf pro Arm, runder Probenkörper mit 120 mm Durchmesser. Zur Bewertung werden Noten von 1 bis 5 vergeben, wobei folgendes gilt:

| | |
|---|---|
| Note 5: | Lediglich geringe Spuren der Abrasion sind erkennbar. |
| Note 4: | Die Oberfläche ist teilweise aufgeraut, Spuren von Abrasion sind erkennbar |
| Note 3: | Die Oberfläche ist aufgeraut, noch ist aber kein Material aus dem Inneren des Vliesstoffs ausgetragen worden. |
| Note 2: | Die Oberfläche ist aufgeraut, auch Material aus dem Inneren des Vliesstoffs wurde ausgetragen. |
| Note 1: | Die Oberfläche ist deutlich aufgeraut, unterliegendes Material scheint durch. |

**Anteil der Gesamtgrundfläche der Vertiefungen an der Gesamtfläche des Vliesstoffs:** Zunächst wird der Durchmesser der Grundfläche der Vertiefungen gemessen. An der breitesten Stelle der geprägten Bereiche (in Figur 2 bezeichnet als b) wird von 5 geprägten Bereichen bestimmt und ein Mittelwert gebildet. Auf Basis dieses Wertes wird unter Berücksichtigung der Geometrie die Fläche der geprägten Bereiche bestimmt und der Anteil zur Gesamtfläche des Vliesstoffs berechnet.

**Schmelzpunkt der thermoplastischen Fasern:** Messung nach Prüfvorschrift gemäß DIN EN ISO 11357-3 mit einer Aufheizrate von 10 °C/min.

## Patentansprüche

1. Thermisch geprägter Vliesstoff, geeignet zur Herstellung einer Dekorschicht für den Autoinnenraum, wobei der Vliesstoff thermoplastische Fasern enthält, vernadelt ist und eine Höchstzugdehnung von mindestens 30 % zeigt, und wobei der Vliesstoff eingeprägte Vertiefungen aufweist, die an ihrem Grund Grundflächen aufweisen, wobei das Verhältnis zwischen der Dicke des Vliesstoffs im Bereich der Grundflächen der Vertiefungen und der Dicke des Vliesstoffs im Bereich der ungeprägten Bereiche höchstens 0,1 beträgt, **dadurch gekennzeichnet, dass** der Anteil der Gesamtgrundfläche der Vertiefungen an der Gesamtfläche des Vliesstoffs von 0,5 % bis 30 % beträgt.

2. Vliesstoff nach Anspruch 1, **dadurch gekennzeichnet, dass** die geprägten Bereiche ultraschallgeprägte Bereiche sind.

3. Vliesstoff nach Anspruch 1 oder 2, **gekennzeichnet durch** ein Aspektverhältnis der geprägten Bereiche von 4:1 bis 1:2, bevorzugt von 4:1 bis 1:1, und insbesondere von 3:1 bis 1:1.

4. Vliesstoff nach einem oder mehreren der vorangegangenen Ansprüche, **gekennzeichnet durch** eine Dicke im Bereich von 0,25 mm bis 2,5 mm, bevorzugt von 0,5 mm bis 2,5 mm, noch bevorzugter von 0,5 mm bis 2,0 mm und insbesondere von 1,0 mm bis 2,0 mm.

5. Vliesstoff nach einem oder mehreren der vorangegangenen Ansprüche, **dadurch gekennzeichnet, dass** er auf mindestens einer Oberfläche eine polymere Binderschicht, vorzugsweise enthaltend Polyakrylate, Polystyrol, Polyurethane, Polyvinylacetat-Ethylen Copolymere, deren Gemische und Copolymere, aufweist.

6. Vliesstoff nach einem oder mehreren der vorangegangenen Ansprüche, **dadurch gekennzeichnet, dass** er nach einem Thermoformen um eine Kante mit einem Winkel von 90° im Bereich der Verformung ein Verhältnis zwischen der Dicke des Vliesstoffs im Bereich der Grundflächen der Vertiefungen und der Dicke des Vliesstoffs im Bereich der ungeprägten Bereiche höchstens 0,1 aufweist.

7. Verfahren zur Herstellung eines thermisch geprägten Vliesstoffs, geeignet als Dekorschicht für den Autoinnenraum, umfassend folgende Schritte:
o Bereitstellen eines vernadelten Vliesstoffs, umfassend thermoplastische Fasern,
o Thermisches Prägen des Vliesstoffs, **dadurch gekennzeichnet, dass** dem Vliesstoff eingeprägte Vertiefungen verliehen werden, die an ihrem Grund Grundflächen aufweisen, wobei das Verhältnis zwischen der Dicke des Vliesstoffs im Bereich der Grundflächen der Vertiefungen und der Dicke des Vliesstoffs im Bereich der ungeprägten Bereiche höchstens 0,1 beträgt, und wobei der Anteil der Gesamtgrundfläche der Vertiefungen an der Gesamtfläche des Vliesstoffs von 0,5 % bis 30 % beträgt.

8. Verwendung eines Vliesstoffs nach einem oder mehreren der Ansprüche 1 bis 6 als Dekorschicht für den Autoinnenraum und insbesondere als Dachhimmel.

9. Verwendung nach Anspruch 8, **dadurch gekennzeichnet, dass** der Vliesstoff zur Anpassung an den Autoinnenraum einem ThermoformingProzess unterworfen wird.

## Claims

1. Thermally embossed nonwoven fabric, suitable for the production of a decorative layer for the interior of an automobile, where the nonwoven fabric comprises thermoplastic fibres, has been needled, and exhibits an ultimate tensile elongation of at least30%, and where the nonwoven fabric has embossed depressions which have basal areas at their base, where the ratio of the thickness of the nonwoven fabric in the region of the basal areas of the depressions to the thickness of the nonwoven fabric in the region of the unembossed regions is at most 0.1, **characterized in that** the proportion of the total basal area of the depressions, based on the total area of the nonwoven fabric, is 0.5% to 30%.

2. Nonwoven fabric according to Claim 1, **characterized in that** the embossed regions are ultrasound-embossed regions.

3. Nonwoven fabric according to Claim 1 or 2, **characterized by** an aspect ratio of the embossed regions of 4:1 to 1:2, preferably of 4:1 to 1:1, and in particular of 3:1 to 1:1.

4. Nonwoven fabric according to one or more of the preceding claims, **characterized by** a thickness in the range of 0.25 mm to 2.5 mm, preferably of 0.5 mm to 2.5 mm, more preferably of 0.5 mm to 2.0 mm and in particular of 1.0 mm to 2.0 mm.

5. Nonwoven fabric according to one of more of the preceding claims, **characterized in that** it has, on at least one surface, a polymeric binder layer, preferably comprising polyacrylates, polystyrene, polyurethanes, polyvinyl acetate-ethylene copolymers, their mixtures and copolymers.

6. Nonwoven fabric according to one of more of the preceding claims, **characterized in that** after thermoforming around an edge with an angle of 90° it has, in the region of the deformation, a ratio of at most 0.1 between the thickness of the nonwoven fabric in the region of the basal areas of the depressions and the thickness of the nonwoven fabric in the region of the unembossed regions.

7. Process for the production of a thermally embossed nonwoven fabric, suitable as decorative layer for the interior of an automobile, comprising the following steps:
o provision of a needled nonwoven fabric, comprising thermoplastic fibres,
o thermal embossing of the nonwoven fabric, **characterized in that** provided to the nonwoven fabric are embossed depressions which have basal areas at their base, where the ratio of the thickness of the nonwoven fabric in the region of the basal areas of the depressions to the thickness of the nonwoven fabric in the region of the unembossed regions is at most 0.1, and where the proportion of the total basal area of the depressions, based on the total area of the nonwoven fabric, is 0.5% to 30%.

8. Use of a nonwoven fabric according to one or more of Claims 1 to 6 as decorative layer for the interior of an automobile and in particular as roof lining.

9. Use according to Claim 8, **characterized in that** the nonwoven fabric is subjected to a thermoforming process for adaptation to the interior of an automobile.

## Revendications

1. Non-tissé gaufré thermiquement, approprié pour produire une couche décorative destinée à l'habitacle de voiture, le non-tissé contenant des fibres thermoplastiques, étant aiguilleté et présentant un allongement maximal à la traction d'au moins 30 %, et le non-tissé comportant des dépressions gaufrées qui comportent au fond des surfaces de fond, le rapport entre l'épaisseur du non-tissé au niveau des surfaces de fond des dépressions et l'épaisseur du non-tissé au niveau des zones non gaufrées étant d'au plus 0,1, **caractérisé en ce que** le pourcentage de surface de fond totale des dépressions rapporté à la surface totale du non-tissé est compris entre 0,5 % et 30 %.

2. Non-tissé selon la revendication 1, **caractérisé en ce que** les zones gaufrées sont des zones gaufrées par ultrasons.

3. Non-tissé selon la revendication 1 ou 2, **caractérisé par** un rapport d'aspect des zones gaufrées allant de 4:1 à 1:2, de préférence de 4:1 à 1:1, et en particulier de 3:1 à 1:1.

4. Non-tissé selon une ou plusieurs des revendications précédentes, **caractérisé par** une épaisseur dans la gamme allant de 0,25 mm à 2,5 mm, de préférence de 0,5 mm à 2,5 mm, encore plus préférablement de 0,5 mm à 2,0 mm et en particulier de 1,0 mm à 2,0 mm.

5. Non-tissé selon une ou plusieurs des revendications précédentes, **caractérisé en ce qu'**il comporte sur au moins une surface une couche de liant polymère, contenant de préférence des polyacrylates, du polystyrène, des polyuréthanes, des copolymères polyacétate de vinyle-éthylène, des mélanges et copolymères de ceux-ci.

6. Non-tissé selon une ou plusieurs des revendications précédentes, **caractérisé en ce qu'**il présente, après thermoformage autour d'un bord à un angle de 90° dans la zone de déformation, un rapport entre l'épaisseur du non-tissé au niveau des surfaces de fond des dépressions et l'épaisseur du non-tissé au niveau des zones non gaufrées d'au plus 0,1.

7. Procédé de production d'un non-tissé gaufré thermiquement, approprié comme couche décorative destinée à l'habitacle de voiture, le procédé comprenant les étapes suivantes :
∘ fournir un non-tissé aiguilleté comprenant des fibres thermoplastiques,
∘ gaufrer thermiquement le non-tissé, **caractérisé en ce que** le non-tissé est pourvu de dépressions gaufrées qui comportent au fond des zones de fond, le rapport entre l'épaisseur du non-tissé au niveau des zones de fond des dépressions et l'épaisseur du non-tissé au niveau des zones non gaufrées étant d'au plus 0,1, et le pourcentage de la surface de fond totale des dépressions rapporté à la surface totale du non-tissé étant de 0,5 % à 30 %.

8. Utilisation d'un non-tissé selon une ou plusieurs des revendications 1 à 6 comme couche décorative destinée à l'habitacle de voiture et en particulier comme garniture de toit.

9. Utilisation selon la revendication 8, **caractérisée en ce que** le non-tissé est soumis à un procédé de thermoformage afin de l'adapter à l'habitacle de voiture.
